# EUROPÄISCHE PATENTSCHRIFT

(11) **EP 1 850 123 B1**
(45) Veröffentlichungstag und Bekanntmachung des Hinweises auf die Patenterteilung: **21.02.2018**
(21) Anmeldenummer: 07106088.3
(22) Anmeldetag: 12.04.2007
(51) Int. Cl.: G01N 25/16, G01B 11/24

(54) **Optisches Dilatometer**
Optical dilatometer
Dilatomètre optique

(30) Priorität: 24.04.2006 DE 102006019433
(43) Veröffentlichungstag der Anmeldung: 31.10.2007
(73) Patentinhaber: Waters GmbH, 65760 Eschborn (DE)
(72) Erfinder: Bähr, Heinz, 32545 Bad Oeynhausen (DE)
(74) Vertreter: Dantz, Jan Henning

(56) Entgegenhaltungen:
- DE-A1- 3 514 000
- DE-A1- 10 336 718
- JP-A- 61 155 743
- US-A1- 2005 135 706

## Beschreibung

Die vorliegende Erfindung betrifft ein optisches Dilatometer nach dem Oberbegriff des Anspruches 1.

Dilatometer sind Messgeräte, mit denen die lineare thermische Ausdehnung einer Probe als Funktion der Temperatur gemessen wird. Aus der EP 1 329 687 ist ein optisches Dilatometer bekannt, bei dem zwischen zwei optischen Systemen ein Halter für die Probe angeordnet ist. Die Probe ist dabei von einem rohrförmigen Ofenkörper umgeben, damit entsprechende Temperaturänderungen auf die Probe einwirken können. Für eine Messung der Längenänderung wird eine Probe in den Ofen gelegt und eines der optischen Systeme wird auf das eine Ende der Probe gerichtet und das andere optische System wird auf das andere Ende der Probe gerichtet. Diese Ausrichtung der optischen Systeme bzw. der Probe ist vergleichsweise aufwendig.

Die DE 103 36 718 offenbart eine Vorrichtung zur optischen Vermessung der Konturen von Körpern bei hohen Temperaturen in einem Rohrofen. Dabei wird in den Rohrofen von einer Seite Licht eingestrahlt, während der Schatten der Probe auf der anderen Seite erfasst wird. Die Probe soll dabei auf einer Unterlage mit zwei Keramikstäben und einer Linearführung ruhen.

Die JP 61 155 743 zeigt eine im Aufbau ähnliche Vorrichtung eines Dilatometers.

Die DE 35 14 000 zeigt ein berührungslos arbeitendes Dilatometer. Dieses Dilatometer weist ein optisches System zur Messung einer Länge der Probe bei unterschiedlichen Temperaturen auf, das auf der einen Seite eine Lichtquelle und einen Kollimator zur Erzeugung eines parallelen Strahlenganges umfasst, wobei das Volumen der Probe und eine Volumenänderung über ein Schattenbild durch einen auf der gegenüberliegenden Seite vorhandenen Sensor erfassbar ist.

Der Erfindung liegt daher die Aufgabe zugrunde, ein Dilatometer zu schaffen, das bei einfachem Aufbau leicht zu handhaben ist.

Diese Aufgabe wird mit einem Dilatometer mit den Merkmalen des Anspruches 1 gelöst.

Weitere vorteilhafte Ausgestaltungen sind in den Unteransprüchen angegeben.

Dabei sind an einer Seite des Ofens eine Lichtquelle und ein Kolllimator zur Erzeugung eines parallelen Strahlenganges angeordnet, und die Länge der Probe ist über ein Schattenbild durch einen auf der gegenüberliegenden Seite angeordneten Sensor erfassbar. Dadurch entfällt die Notwendigkeit das optische System oder die Probe auszurichten, da die Probe an jeder beliebigen Stelle auf dem Probenträger vermessen werden kann.

Gemäß einer bevorzugten Ausgestaltung der Erfindung ist auf der Empfängerseite ein Filter vorgesehen, der nur für Strahlen einer bestimmten Wellenlänge durchlässig ist, die auf der Seite der Lichtquelle ausgesendet werden. Dadurch können Störeinflüsse durch Licht oder Strahlen mit einer anderen Wellenlänge relativ sicher ausgeschlossen werden.

Vorzugsweise ist auf der Empfängerseite ein telezentrisches optisches System angeordnet ist. Das Schattenbild durch die Probe kann dann auf einen Sensor abgebildet werden, der für eine automatische Erfassung der Probenlänge als Hochgeschwindigkeits-Linear-CCD Sensor ausgebildet sein kann. Für eine schnelle und einfach Messung ist der Sensor vorzugsweise an einen A/D Wandler angeschlossen, der mit einer Steuerung zur Erkennung des Randes des erfassten Bildes verbunden ist.

Für eine besonders genaue Messung ist die Lichtquelle durch eine Hochleistungs-GaN-LED gebildet, deren Licht eine besonders konstante Wellenlänge besitzt. Dabei kann zwischen der Lichtquelle und dem Kollimator noch ein Diffusor angeordnet sein.

Für die Ausbildung eines gleichmäßigen Temperaturprofils besitzt der Probenraum eine zylindrische Form, wobei der Probenträger radial zentriert in dem Probenraum und zwischen einem oberen und einem unteren Heizelement angeordnet ist. An gegenüberliegenden Seiten des Probenraumes sind jeweils für den Strahlengang durchlässige Fenster vorgesehen.

Ein vorteilhafter Aufbau des Ofens ergibt sich durch einen in ein Oberteil und ein Unterteil geteilten Ofenkörper, wobei die Trennebene zwischen dem Oberteil und dem Unterteil zwischen den ober- und den unterseitigen Heizelement durch den Probenraum hindurchgeht. Man kann folglich das Oberteil vom Unterteil des Ofenkörpers abnehmen, womit der Probenraum leicht zugänglich und die Beladung des Probenraumes auch durch Robotertechnik sehr einfach möglich ist. Dabei hat zweckmäßig der Ofenkörper eine zylindrische Grundform, deren Achse mit der des Probenraumes zusammenfällt. Der Ofen ist für den Betrieb unter Vakuum und Schutzgas ausgelegt. Entsprechende Vorkehrungen wie Dichtungselemente an der Trennebene und an den optischen Fenstern garantieren diese Betriebsart.

Die Erfindung wird nachfolgend anhand zweier Ausführungsbeispiele mit Bezug auf die beigefügten Zeichnungen näher erläutert. Es zeigen:
- Figur 1: eine geschnittene Seitenansicht auf ein Ausführungsbeispiel eines erfindungsgemäßen Ofens;
- Figur 2: eine geschnittene Draufsicht auf den Ofen der Figur 1;
- Figur 3: eine perspektivische Ansicht des Ofens der Figur 1;
- Figur 4: eine perspektivische Ansicht des Ofens der Figur 1 mit geöffnetem Oberteil;
- Figur 5: eine perspektivische Ansicht eines modifizierten Ausführungsbeispiels, und
- Figur 6: eine perspektivische Ansicht des Ofens der Figur 5 mit geöffnetem Oberteil.

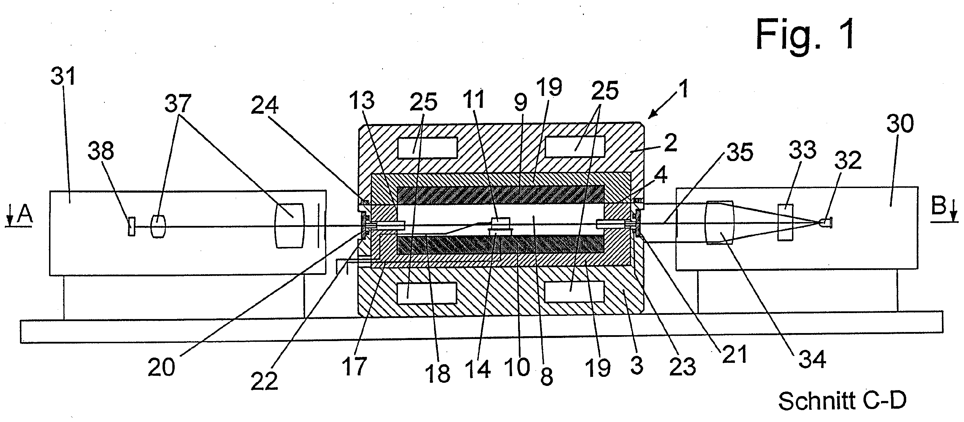

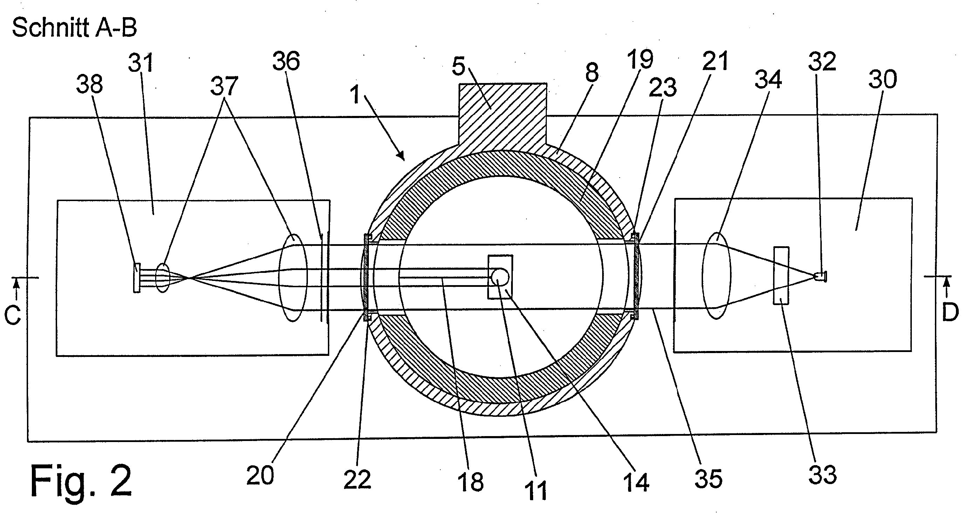

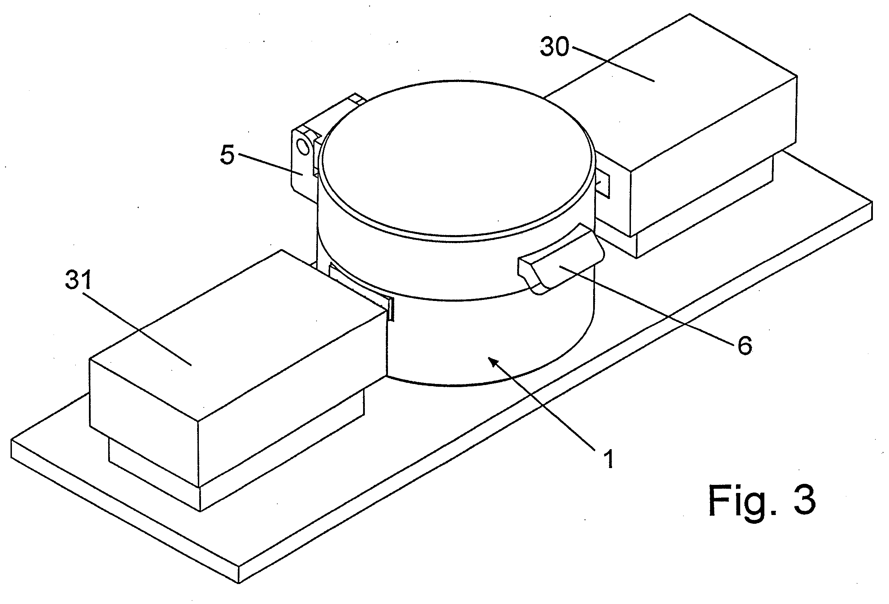

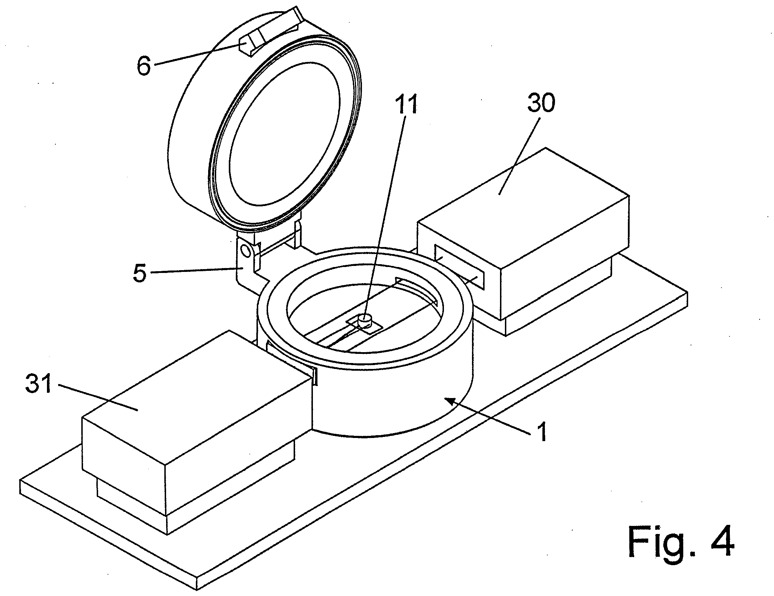

In den Figuren 1 bis 4 ist ein Dilatometer mit einem Ofen 1 dargestellt, der eine zylindrische Grundform hat. Er gliedert sich in ein Oberteil 2 und ein Unterteil 3, die voneinander abhebbar sind und entlang einer im horizontal verlaufenden Trennebene 4 deckungsgleich aufeinandersetzbar sind. Das Abheben und Aufsetzen des Oberteils 2 kann über ein Scharnier 5 erfolgen, das an dem Oberteil 2 und dem Unterteil 3 festgelegt ist. Auf der gegenüberliegenden Seite ist ein Griff 6 an dem Oberteil 2 vorgesehen.

Zentral im Inneren des zylindrischen Ofenkörpers 1 umschließen das Oberteil 2 und das Unterteil 3 einen Probenraum 8, der eine flache, hohlzylindrische Gestalt hat und koaxial im Ofenkörper 1 angeordnet ist. Mit dem Aufsetzen des Oberteils 2 auf das Unterteil 3 ist der Probenraum 8 verschlossen. Oberseitig wird der Probenraum 8 durch eine Heizelement 9 begrenzt, die im wesentlichen die Gestalt z.B. einer kreisförmigen Scheibe haben kann, welche an der Unterseite des Oberteils 2 zur Trennebene 4 hin angeordnet ist. In analoger Weise wird der Probenraum 8 nach unten hin durch ein unteres Heizelement 10 begrenzt, wobei die kreisförmigen Heizelemente 9 und 10 miteinander deckungsgleich sind.

Der hohlzylindrische Probenraum 8 hat eine Höhe, die um ein Mehrfaches kleiner als der Durchmesser des Probenraums 8 ist. Der Probenraum ist durch eine Seitenwandung 13 in Form einer umlaufenden Zylindermantelinnenfläche umschlossen, über die hinweg die Naht der Trennebene 4 verläuft. Der Durchmesser des Probenraums 8 ist etwa gleich groß wie die oberen und unteren Heizelemente 9 und 10 welche von einer Wärmeisolation 19 randseitig umfasst werden. Die Wärmeisolation im Oberteil 2 und im Unterteil 3 des Ofenkörpers 1 ist derart angeordnet, dass bei geschlossenem Oberteil 2 der Probenraum 8 wärmeisoliert ist und auf hohe Temperaturen von beispielsweise bis 2000°C beheizbar ist.

Zentral im Probenraum 8 ist als Probenträger ein Podest 14 angeordnet, das eine ebene, horizontale Oberseite hat. Auf dem Podest 14 liegt eine Probe 11, die von oben her aufsetzbar ist. Die Probe 11 kann für eine Vermessung an jeder Stelle des Podestes 14 im Bereich eines Strahlenganges 35 abgelegt werden, wobei durch die Anordnung der Heizelemente 9 und 10 sich im Bereich des Podestes 14 ein gleichmäßiges Temperaturprofil ausbildet.

In der Nähe des Podests 14 befindet sich noch ein Probenthermoelement 18 und in oder an der Heizscheibe 10 ein Regelthermoelement 17. Zum Betrieb des Ofens 1 bei hohen Temperaturen ist ferner noch in dem Oberteil 2 und dem Unterteil 3 eine Wasserkühlung 25 vorgesehen.

Benachbart zu dem Ofen 1 ist ein optisches System angeordnet, das die Längenänderung der Probe 11 in Abhängigkeit von der Temperatur misst.

Das optische System umfasst einen optischen Sender 30 und einem Empfänger 31. Der Sender 30 hat eine Lichtquelle in Form einer Hochleistungs-GaN-LED 32, welche ein Licht mit sehr konstanter Wellenlänge aussendet und eine Diffusionseinheit 33 sowie eine Kollimatorlinse 34 die das Licht parallel aussendet. Der dadurch erzeugte parallele Strahlengang 35 tritt durch ein in dem Unterteil 3 ausgebildetes Fenster 21 ein und trifft dort auf die Probe 11. Der Strahlengang 35 ist dabei etwas breiter ausgebildet als die Breite des Probenträgers 14. Nur Strahlen die nicht auf die Probe 11 treffen, treten durch ein Fenster 20 wieder aus, das auf der zu dem Fenster 21 gegenüberliegenden Seite des Unterteils 3 angeordnet ist.

Das Fenster 21 ist über eine Dichtung 23 und das Fenster 20 ist über eine Dichtung 22 an einer Seitenwand des Probenraumes 8 festgelegt. Ferner ist das Oberteil 2 mit einer Dichtung 24 abgedichtet an dem Unterteil 3 angeordnet, so dass der Probenraum 8 mit einer Gasfüllung oder mit einem Vakuum versehen sein kann.

Durch die Lichtquelle 32 und die Probe 11 entstehen Schattenstrahlen, die auf der Empfängerseite 31 zunächst auf ein Filter 36 auftreffen. Der Filter 36 kann so ausgebildet sein, dass er nur die Strahlen mit der von der Hochleistungs-GaN-LED 32 ausgesandten Wellenlänge durchlässt. Anschließend durchlaufen die Strahlen ein telezentrisches optisches System 37 mit ein oder mehreren Linsen und treffen dann auf einen Hochgeschwindigkeits-Linear-CCD Sensor 38. Die Signale des Sensors 38 werden zur Auswertung an einem A/D-Wandler und dann zu einem digitalen Randerkennungs-Prozessor und zur CPU-Einheit weitergeleitet.

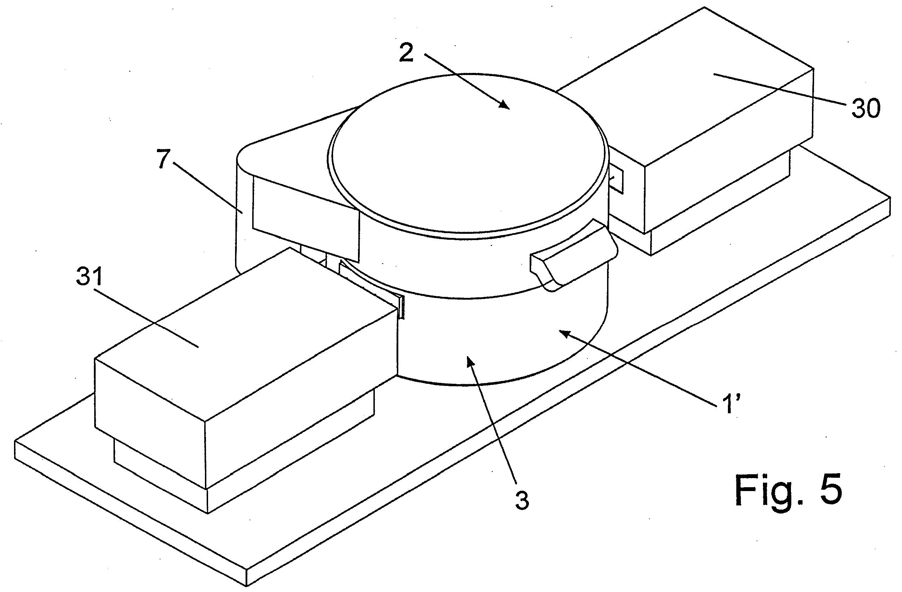

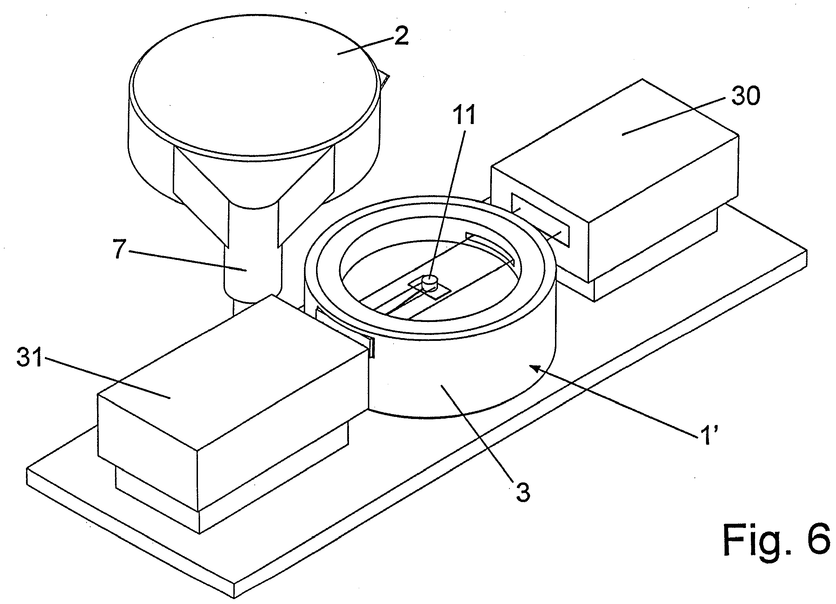

In den Figuren 5 und 6 ist eine modifizierte Ausführungsform eines Ofens 1' dargestellt, bei dem statt des Scharnieres 5 ein Hub- und Schwenkmechanismus 7 vorgesehen ist. Durch den Hub- und Schwenkmechanismus 7 wird das Oberteil 2 von dem Unterteil 3 abgehoben und seitlich weggeschwenkt, so dass der Probenraum 8 von oben zugänglich ist, um die Probe 11 einzusetzen oder zu entnehmen. Im übrigen ist der Ofen 1' wie bei dem vorangegangenen Ausführungsbeispiel ausgebildet.

## Patentansprüche

1. Optisches Dilatometer, mit einem Ofen in dem eine Probe (11) auf einem zentralen Probenträger (14) ablegbar ist, und einem optischen System zur Messung einer Länge der Probe bei unterschiedlichen Temperaturen, wobei an gegenüberliegenden Seiten eines Probenraumes (8) jeweils ein für den Strahlengang durchlässiges Fenster (20, 21) vorgesehen ist, wobei an einer Seite des Ofens eine Lichtquelle (32) und ein Kollimator (34) zur Erzeugung eines parallelen Strahlenganges angeordnet sind, und die Länge der Probe (11) über ein Schattenbild durch einen auf der gegenüberliegenden Seite angeordneten Sensor (38) erfassbar ist, **dadurch gekennzeichnet, dass** der Probenraum (8) eine zylindrische Form besitzt, der Probenträger (14) radial zentriert in dem Probenraum (8) angeordnet und der Ofen in ein Oberteil (2) und ein Unterteil (3) geteilt ist, wobei eine horizontale Trennebene zwischen dem Oberteil (2) und dem Unterteil (3) gebildet ist und die Probe bei geöffnetem Probenraum von oben frei zugänglich ist, und wobei der Probenraum durch eine Seitenwandung (13) in Form einer Zylindermantelinnenfäche umschlossen ist, über die hinweg die Naht der Trennebene (4) verläuft.

2. Dilatometer nach Anspruch 1, **dadurch gekennzeichnet, dass** auf einer Empfängerseite ein Filter (36) vorgesehen ist, der nur für Strahlen einer bestimmten Wellenlänge durchlässig ist, und zwar für Strahlen, die auf der Seite der Lichtquelle (32) ausgesendet werden.

3. Dilatometer nach Anspruch 1 oder 2, **dadurch gekennzeichnet, dass** auf einer Empfängerseite ein telezentrisches optisches System (37) angeordnet ist.

4. Dilatometer nach einem der Ansprüche 1 bis 3, **dadurch gekennzeichnet, dass** der Sensor (38) als Hochgeschwindigkeits-Linear-CCD Sensor ausgebildet ist.

5. Dilatometer nach einem der Ansprüche 1 bis 4 **dadurch gekennzeichnet, dass** der Sensor (38) an einen A/D Wandler angeschlossen ist, der mit einer Steuerung zur Erkennung des Randes des erfassten Bildes verbunden ist.

6. Dilatometer nach einem der Ansprüche 1 bis 5, **dadurch gekennzeichnet, dass** die Lichtquelle (32) durch eine Hochleistungs-GaN-LED gebildet ist.

7. Dilatometer nach einem der Ansprüche 1 bis 6, **dadurch gekennzeichnet, dass** zwischen der Lichtquelle (32) und dem Kollimator (34) ein Diffusor (33) angeordnet ist.

8. Dilatometer nach einem der Ansprüche 1 bis 7, **dadurch gekennzeichnet, dass** die Breite des Strahlenganges (35) größer ist als die Breite des Probenträgers (14).

## Claims

1. An optical dilatometer, comprising an oven in which a sample (11) can be deposited on a central sample carrier (14), and an optical system for measuring a length of the sample at different temperatures, wherein on opposite sides of a sample space (8) a respective window (20, 21) is provided which is permeable to the beam path, wherein a light source (32) and a collimator (34) for generating a parallel beam path are arranged on one side of the oven, and the length of the sample (11) can be detected via a shadow image through a sensor (38) arranged on the opposite side, **characterized in that** the sample space (8) has a cylindrical shape, the sample carrier (14) is arranged in a radially centered manner in the sample space (8), and the oven is divided into an upper part (2) and a lower part (3), wherein a horizontal parting plane is formed between the upper part (2) and the lower part (3) and the sample is freely accessible from above when the sample space is open, and wherein the sample space is enclosed by a side wall (13) in the form of an inner cylinder jacket surface, over which extends the seam of the parting plane (4).

2. A dilatometer according to claim 1, **characterized in that** on a receiver side a filter (36) is provided, which is permeable only to rays of a certain wavelength, namely for rays emitted on the side of the light source (32).

3. A dilatometer according to claim 1 or 2, **characterized in that** a telecentric optical system (37) is arranged on a receiver side.

4. A dilatometer according to one of the claims 1 to 3, **characterized in that** the sensor (38) is designed as a high-speed linear CCD sensor.

5. A dilatometer according to one of the claims 1 to 4, **characterized in that** the sensor (38) is connected to an A/D converter, which is connected to a controller for detecting the edge of the detected image.

6. A dilatometer according to one of the claims 1 to 5, **characterized in that** the light source (32) is formed by a high-power GaN LED.

7. A dilatometer according to one of the claims 1 to 6, **characterized in that** a diffuser (33) is arranged between the light source (32) and the collimator (34).

8. A dilatometer according to one of the claims 1 to 7, **characterized in that** the width of the beam path (35) is greater than the width of the sample carrier (14).

## Revendications

1. Dilatomètre optique, avec un four dans lequel une éprouvette (11) peut être déposée sur un support d'éprouvette (14) central et avec un système optique pour mesurer une longueur de l'éprouvette à différentes températures, dans lequel sont prévues, sur des côtés opposés de l'espace pour l'éprouvette (8), des fenêtres (20, 21) laissant passer le faisceau de rayonnement,
dans lequel une source lumineuse (32) et un collimateur (34) sont disposés sur un côté du four pour produire un faisceau de rayonnement parallèle et la longueur de l'éprouvette (11) peut être détectée par un capteur (38) disposé sur le côté opposé à l'aide d'une ombre portée, **caractérisé en ce que** l'espace pour l'éprouvette (8) est de forme cylindrique, le support d'éprouvette (14) est centré dans le sens radial dans l'espace pour l'éprouvette (8) et le four est partagé en une partie supérieure (2) et une partie inférieure (3), un plan de séparation horizontal étant formé entre la partie supérieure (2) et la partie inférieure (3) et l'éprouvette étant librement accessible par le haut quand l'espace pour l'éprouvette est ouvert, et l'espace pour l'éprouvette étant entouré par une paroi latérale (13) formant une surface intérieure d'enveloppe cylindrique au-delà de laquelle s'étend la jointure du plan de séparation (4).

2. Dilatomètre selon la revendication 1, **caractérisé en ce qu'**est prévu du côté du récepteur un filtre (36) qui ne laisse passer que les rayons d'une certaine longueur d'onde, à savoir les rayons émis sur le côté de la source lumineuse (32).

3. Dilatomètre selon la revendication 1 ou 2, **caractérisé en ce qu'**un système optique télécentrique (37) est disposé du côté d'un récepteur.

4. Dilatomètre selon l'une des revendications 1 à 3, **caractérisé en ce que** le capteur (38) est conçu comme un capteur CCD linéaire à grande vitesse.

5. Dilatomètre selon l'une des revendications 1 à 4, **caractérisé en ce que** le capteur (38) est connecté à un convertisseur A/N qui communique avec une unité de commande pour reconnaître le bord de l'image acquise.

6. Dilatomètre selon l'une des revendications 1 à 5, **caractérisé en ce que** la source lumineuse (32) est formée par une DEL GaN à haute puissance.

7. Dilatomètre selon l'une des revendications 1 à 6, **caractérisé en ce qu'**un diffuseur (33) est disposé entre la source lumineuse (32) et le collimateur (34).

8. Dilatomètre selon l'une des revendications 1 à 7, **caractérisé en ce que** la largeur du faisceau de rayonnement (35) est plus grande que celle du support d'éprouvette (14).
